# EUROPEAN PATENT APPLICATION

(11) **EP 0 908 416 A1**
(43) Date of publication of application: **14.04.1999**
(21) Application number: 97203063.9
(22) Date of filing: 06.10.1997
(51) Int. Cl.: C02F 11/04, B09B 3/00

(54) **Anaerobic process for combined treatment of sewage sludges and organic solid waste**

(71) Applicant: Lykos Establishment, 9488 Schellenberg (LI)
(72) Inventor: Giezendanner, Sergio, 6977 Ruvigliana (CH)
(74) Representative: Bottero, Claudio

(57) **Abstract**

An anaerobic process for the combined treatment of sewage sludges and organic solid waste stands out for the fact of feeding organic solid waste (3) and a flow comprising sewage sludges (5) to an anaerobic decomposition section (14), wherein the organic substances are decomposed by anaerobic fermentation, obtaining a gas flow (6) comprising methane and a flow comprising stabilised sewage sludge (7).

## Description

### Field of application

The present invention relates to an anaerobic process for the combined treatment of sewage sludges and organic solid waste.

In the following of the description and subsequent claims, with the term: "sewage sludges", it is intended to mean a liquid waste flowing out from treatment sections of plants for the purification of civil and/or industrial effluents, and/or directly from civil and/or industrial facilities as a septic waste of sanitary origin or as a liquid waste from working cycles, for instance sewage sludges from sewer waste.

In the following of the description and subsequent claims, with the term: "anaerobic process for the combined treatment of sewage sludges and organic solid waste", it is intended to mean a single process that advantageously integrates the anaerobic process for the treatment of organic solid waste with the anaerobic process for the treatment of sewage sludges.

In other words, thanks to this process according to the invention - which will be expounded with more details in the following of the description - the organic substances contained in the organic solid waste as well as in the sewage sludges are submitted at the same time and in a same decomposition section, to a decomposition step through anaerobic fermentation, producing a gas flow comprising methane and a flow comprising stabilised sewage sludge.

The invention also relates to a plant for implementing the aforesaid process, as well as to a method for the modernisation of a sewage sludges treatment plant.

In the following of the description and subsequent claims, with the term: "modernisation", it is generally intended to mean the modification of an existing purification plant in order to make it more versatile, i.e. suited for disposing of different types of waste, improving at the same time its performances so as to obtain, for instance, a better efficiency in the decomposition of organic substances, a higher energy recovery, and a reduction in operating costs.

As is known, in consequence of the increasingly strict norms that regulate in the industrialised countries the collection and the disposal of organic waste in general, there is increasingly felt the need of setting up processes for the disposal of such waste in a simple, non polluting manner, with low investment and running costs.

### Prior art

In order to meet the above requirement, processes for the treatment of sewage sludges based on the anaerobic fermentation of the organic substances contained therein have found a wide application.

In particular, the anaerobic decomposition of the biodegradable organic substances contained in the sewage sludges in reactors that operate in the absence of free or dissolved gaseous molecular oxygen allows to obtain an energy recovery in the form of cogeneration of methane gas and a stabilised sewage sludge, the latter being suited for instance for use in agriculture as an amendment.

Afterwards, said process was also proposed for the disposal of the organic portion of solid town waste resulting from differentiated collection, as an alternative to aerobic decomposition processes such as composting or dumping.

However, in this case the corresponding treatment plant is distinct and cannot be integrated with the sludges decomposition plant because of the different physical state and the different composition of the substances to be treated.

In fact, unlike sewage sludges that are substantially liquid, the organic solid waste comprise a high percentage of solid material of medium/large size, on the average between 20 mm and 200 mm, and have a relatively low water content, generally between 10% and 70% in weight with respect to the total weight of waste.

This causes the anaerobic treatment of organic solid waste to require - according to the teaching of the prior art - the utilisation of special decomposition apparatuses whose structure and operation are different from those utilised for the treatment of sewage sludges.

In consequence, even though the processes of anaerobic decomposition of organic solid waste are preferable from both the energy and the environment points of view with respect to conventional composting and dumping systems, their utilisation is markedly limited by the high costs of the plants suited for their implementation.

Considering that said costs are generally to the charge of public authorities, which very often have already made investments for the treatment of sewage sludges, one understands why the realisation of plants for the anaerobic treatment of organic solid waste has had till now scarce development, in spite of the increasingly felt need in the field and the presence of laws that push towards this technology.

### Summary of the invention

The problem underlying the present invention is to make available a process for the anaerobic treatment of organic solid waste of easy implementation, effective and non polluting, and at the same time such as not to require high investment and operating costs.

The above problem is solved, according to the invention, by a process of the aforesaid type that allows the combined treatment of organic solid waste and sewage sludges.

In particular, such a process comprises the steps of:
- feeding organic solid waste to an anaerobic decomposition section;
- feeding a flow comprising sewage sludges to said anaerobic decomposition section;
- decomposing through anaerobic fermentation the organic substances fed to said decomposition section, obtaining a gas flow comprising methane and a flow comprising stabilised sewage sludge.

Advantageously, thanks to the process according to the present invention, and in particular to the step whereby the organic substances comprised in the organic solid waste and the sewage sludges are decomposed in a same section, it is possible to integrate the treatment of organic waste of different types, allowing in this way a reduction in the number of plants necessary for the anaerobic treatment of such waste, reducing therefore substantially the investment and operating costs.

In fact, compared to the teaching of the prior art according to which there must be two different plants for the anaerobic treatment of organic solid waste and of the sewage sludges respectively, the process of the present invention advantageously allows to perform said treatment in one only plant, easy to build and non polluting.

With regard to this point it is worth stressing that the fact of combining the decomposition treatment of organic solid waste and the decomposition treatment of sewage sludges in a single anaerobic process, is in sharp contrast with the constant teaching of the prior art according to which such an integration would not be acceptable insofar it involves the simultaneous mixing and related decomposition of organic waste having a different physical state and a different composition, and that are considered as being incompatible with each other.

The above allegation is proved by the fact that, while the anaerobic decomposition mechanism that is at the basis of such treatment processes is quite the same, there have been developed in the sector - in a completely independent way - a technology for the treatment of organic solid waste and a technology for the realisation of sewage sludges treatment plants, that are different from each other and have no correlation whatever.

It was only thanks to the researches of the Applicant that an integration of the above technologies could be obtained, allowing in this way the simultaneous decomposition of sewage sludges and organic solid waste, and reducing at the same time markedly the investment and operating costs as well as the energy consumption, with respect to two separate processes.

Moreover, it has been advantageously found that by feeding to a single anaerobic decomposition section both the sewage sludges and the organic solid waste one obtains - compared to two separate plants - a quicker and more effective global decomposition of the organic substances which results into a higher production of methane gas - and therefore a higher energy recovery - and a stabilised sewage sludge especially suited for use in agriculture as amendment.

This is probably due to the particular composition of organic solid waste, which is rich in those main nutrients - such as for instance carbon, nitrogen, phosphorus and sulphur - that are necessary for the anaerobic bacterial metabolism, and which therefore accelerates and increases the decomposition of the organic substances fed to the decomposition section.

A further advantage ensuing from the process according to the present invention lies in the fact that by mixing sewage sludges with organic solid waste a dilution can be obtained of the metal compounds generally contained in such sewage sludges, improving the quality of the stabilised product and reducing the inhibiting effect of such compounds on the anaerobic biomass.

Thanks to the presence of a single treatment step of organic solid waste and sewage sludges, the present process also advantageously allows to substantially reduce the problems associated to environment pollution.

Actually, by performing in a single plant the treatment of different types of organic waste, instead of carrying it out in two separate plants as was the case for the prior art, improved scale economies are obtained, with a reduction in the size of the areas necessary for the construction of the plants and a better control of both the emission of bad smells and the final products obtained, reducing therefore the environmental impact of the works on the territory.

With regard to this point, it is important to stress that, advantageously, the treatment plant designed to carry out the present process does not require a section for storing organic solid waste, as is typically included in the anaerobic treatment plants according to the prior art, since once the organic solid waste have been transported to the treatment plant, they can be directly fed to the decomposition section at the same time as sewage sludges.

On the contrary, the storing section is generally necessary in the plants for the anaerobic treatment of town solid waste according to the prior art, as the amount of waste to be disposed of is not such as to allow a continuous utilisation of the decomposition section, which causes the activation in such storing section of an aerobic degradation process of the organic substances (putrefaction), which slows down the subsequent anaerobic fermentation in the decomposition section and brings about further environment problems that are typically associated to the composting and dumping processes.

The process according to the present invention allows therefore to solve the aforesaid technical problem by combining in a very simple and effective way the anaerobic treatment of organic solid waste and the anaerobic treatment of sewage sludges, to low investment and operating costs, and with a limited environmental impact and a high production yield of methane gas.

Preferably, the process according to the present invention further comprises the preliminary steps of:
- feeding at least a part of said organic solid waste to a fluidisation section;
- mixing said organic solid waste with a flow comprising water in said fluidisation section, obtaining a flow comprising organic solid waste in aqueous solution;
- feeding said flow comprising organic solid waste in aqueous solution to said anaerobic decomposition section.

In this way, there is advantageously obtained a suitable hydration and fluidisation of the organic solid waste, which facilitates the mixing with the sewage sludges and their combined treatment.

In order to advantageously increase the speed and the decomposition yield of the organic substances fed to the anaerobic decomposition section, the process according to the present invention further comprises the preliminary step of grinding at least a part of said organic solid waste fed to said anaerobic decomposition section.

Preferably, at least a part of the organic solid waste fed to said fluidisation section is subject to said grinding step.

Actually, by so doing the organic solid waste, whose dimensions are very different from each other, are transformed into a dense and homogeneous pasty state that facilitates the subsequent hydration in the fluidisation section and the mixing with the sewage sludges within the anaerobic decomposition section.

Moreover, it has been advantageously found that the grinding step of organic solid waste accelerates the bacterial activity and thus the ensuing degradation of organic substances in the anaerobic decomposition section.

In order to improve and complete the homogenising of organic solid waste, the process according to the invention further comprises the step of grinding at least a part of the organic solid waste coming from said fludisation section.

Advantageously, the present process also comprises the step or recirculating at least a part of the suitably ground organic solid waste to said fluidisation section.

In this way, it is possible to optimise the fluidisation and the homogenising of organic solid waste, which are in this way transformed into a liquid slime having physical characteristics similar to those of sewage sludges.

Particularly satisfactory results have been achieved by feeding to the anaerobic decomposition section a flow comprising organic solid waste in aqueous solution with a water content comprised between 90% and 95% by weight with respect to the total weight of the solution, and an average size of the solid material smaller than 5 mm.

For the implementation of the above process, the present invention advantageously provides a plant for the combined treatment of sewage sludges and organic solid waste, comprising:
- an anaerobic decomposition section;
- respective means for feeding organic solid waste and a flow comprising sewage sludges to said anaerobic decomposition section, obtaining a gas flow comprising methane and a flow comprising stabilised sewage sludge.

According to a further aspect of the invention, a method is also provided for the modernisation of a sewage sludges treatment plant of the type comprising an anaerobic decomposition section and means for feeding a flow comprising sewage sludges to said anaerobic decomposition section, which is characterised in that it comprises the steps of:
- providing an organic solid waste grinding section;
- providing means (1) for feeding organic solid waste to said grinding section;
- providing means (1, 3) for feeding said organic solid waste suitably ground in said grinding section (11) to said anaerobic decomposition section (14).

Thanks to the above modernisation method that allows to perform the anaerobic treatment of organic solid waste in an existing sewage sludges treatment plant, it is possible to obtain - in a simple and effective way - a high decomposition yield of the organic substances, a high energy recovery and at the same time a drastic reduction in realisation and operating costs.

The characteristics and advantages of the inventions are set forth in the description of an embodiment thereof given below by way of non-limiting example with reference to the attached drawing.

### Short description of the drawing

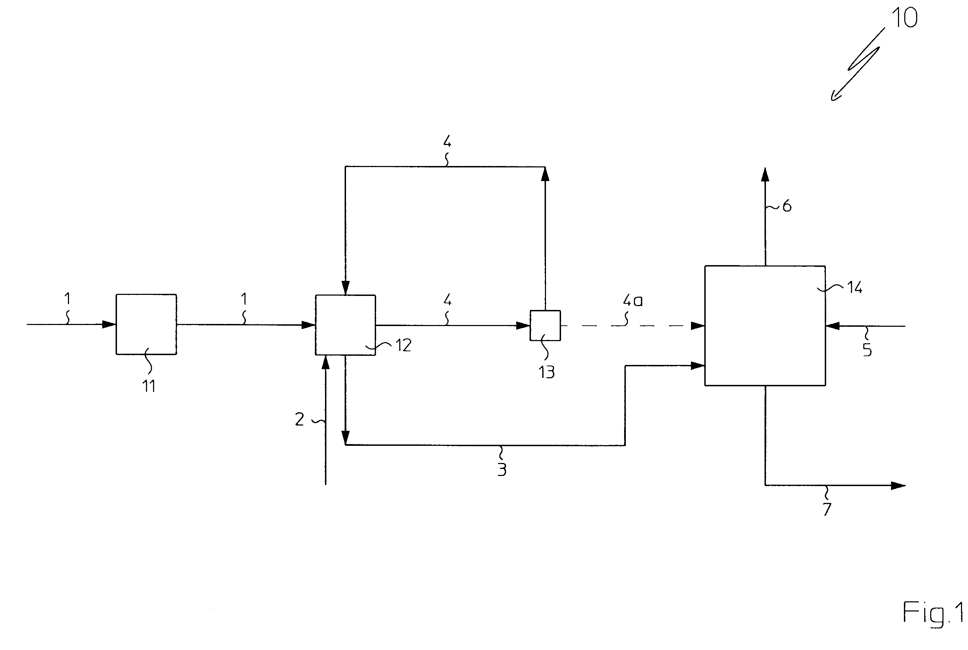

Figure 1 shows a block diagram of the anaerobic process for the combined treatment of sewage sludges and organic solid waste, according to a preferred embodiment of the present invention.

### Detailed description of a preferred embodiment

With reference to Figure 1, there is generally indicated by 10 a block diagram that schematically illustrates the steps of the process for the combined treatment of sewage sludges and organic solid waste, according to a particularly preferred embodiment of the invention.

The organic solid waste are generally composed by the humid fraction of town solid waste coming from the differentiated collection, as well as by the organic solid waste coming from agro-alimentary industries, markets and catering facilities. Such waste are conventionally collected and transported to the anaerobic treatment plants in sacks or bags of biodegradable materials.

Sewage sludges come prevailingly from the treatment sections of civil and/or industrial effluent purification plants. Said effluents flow from town to the purification plants through the sewage networks realised with hydraulic pipings. Special ducts are also provided for the transportation of the sewage sludges to the anaerobic treatment plant.

Blocks 11, 12, 13 and 14 indicate respectively a first grinding section, a fluidisation section and a second grinding section of organic solid waste, and an anaerobic decomposition section.

The first grinding section (block 11) comprises one or more grinding apparatuses, arranged either sequentially or in parallel, which have the function of mincing and mashing the organic solid waste, reducing their size to values preferably lower than 5 mm on the average, producing a homogeneous solid pulp.

The grinding machines usually employed for the production of animal flours proved to be particularly suited for this purpose.

The section of fluidisation of organic solid waste (block 12) varies according to the homogenising degree, water content and quality of the organic solid waste coming from block 11.

Generally, the fluidisation section comprises one or more cylindrical tanks, wherein the organic solid waste are further mixed and hydrated, producing a flow comprising organic solid waste in aqueous solution - in the form of a liquid slime - to be sent to the anaerobic decomposition section (block 14).

The size and number of tanks depend on the quantity of solid waste to be fluidised as well as their quality (i.e. whether said waste are more or less rich in non biodegradable materials). If the pulp coming from block 11 comprises finely homogenised and ground solid parts, it is possible to provide a fluidisation section comprising only one mixing duct, without needing a specific tank.

The second grinding section (block 13), generally comprises a knife-grinding device that can also mince large-size solid bodies possibly included in the flow comprising organic solid waste in aqueous solution that may have escaped the first grinding section (block 11).

According to the amount of organic waste to be disposed of, the anaerobic decomposition section in accordance with the present invention (block 14) comprises one or more anaerobic reactors - referred to as "digester" in the technical jargon - generally known to those skilled in the art, and which therefore will not be described with much details in the following of the description.

Preferably, the decomposition section (block 14) works at a temperature comprised between 25°C and 55°C. Besides, the water content within such section is preferably kept between 85% and 95% by weight.

Flow line 1 represents the feeding of a prefixed amount of organic solid waste to the first grinding section (block 11) respectively to the fluidisation section (block 12).

The organic solid waste which have a water content generally comprised between 10% and 70% by weight with respect to the their total weight, and a size in the range between 10 mm and 200 mm, are sent to block 11 by means of a truck or other conventional transportation means. Once unloaded, the waste are collected and sent to the inlet of the grinding apparatus or apparatuses by means - for instance - of conveyor belts or worms.

The organic solid waste, having gone through the first grinding section (block 11) and having been suitably minced and homogenised, are fed - always through flow line 1 - to the fluidisation section (block 12).

Also flow line 2 - besides flow line 1 - gets in at the inlet of the fluidisation section (block 12), said line 2 representing a flow comprising water coming, for instance, from the outlet of a refluent water purification plant (not shown), or directly from the anaerobic decomposition section (block 14).

In the fluidisation section (block 12), the water content of the organic solid waste is brought to values preferably comprised between 90% and 95% by weight with respect to their total weight, so as to obtain a flow comprising organic solid waste in aqueous solution which is advantageously sent, through flow line 3, to the anaerobic decomposition section (block 14).

In the example of Figure 1, a part of the organic solid waste in aqueous solution formed in the fluidisation section (block 12) is advantageously taken from flow line 4, sent to the second grinding section (block 13) and recirculated - always through flow line 4 - to block 12, obtaining in this way a closed flow circuit between block 12 and block 13.

This embodiment of the invention is particularly suitable when the organic solid waste are very heterogeneous and of a poor quality, and require therefore much grinding and homogenising.

Alternatively, according to a further embodiment of the present invention, at least a part of the flow comprising organic solid waste in aqueous solution obtained in the fluidisation section (block 12) is advantageously sent to the anaerobic decomposition section (block 14) by means of flow lines 4 and 4a (the latter being represented by the broken line of Figure 1) and passing through the second grinding (block 13).

In the latter case, flow line 3 may or may not be included in the process, depending on whether only a part of the flow comprising solid waste in aqueous solution or the whole of such flow is sent to block 13.

The part of waste to be sent to block 14 through flow line 3, respectively flow line 4a, depends on the homogenising and grinding degree one wants to obtain.

In the anaerobic decomposition section (block 14) is advantageously fed, besides flow line 3 or 4a, also flow line 5 which represents a flow comprising sewage sludges.

The water content of sewage sludges is seldom lower than 90% by weight, and is generally comprised between 95 and 98% by weight with respect to the total weight of the sewage sludges. Moreover, such sewage sludges comprise suspended organic solid particles of a very reduced size, generally in the range of about 2-4 mm.

Within block 14, both the organic solid waste and the sewage sludges are advantageously decomposed by anaerobic fermentation, obtaining, after a residence period comprised between 20 and 40 days, a gas flow comprising methane - referred to as "biogas" in the technical jargon - and a stabilised sewage sludge.

The gas flow which, besides methane, also comprises other gases such as carbon dioxide, comes out from the anaerobic decomposition section (block 14) through flow line 6 and is generally sent to special sections for energy recovery - for instance thermal and electric energy generation sections - of a known type and therefore not shown.

The stabilised sewage sludge comes out, instead, from section 14 through flow line 7 and is sent to special dehydration sections (of a known type and therefore not shown) for its possible disposal or reutilisation for instance as amendment in agriculture.

However, the example of Figure 1 described so far is only a preferred embodiment of the process according to the present invention, which advantageously may not include the fluidisation and grinding steps represented by blocks 11, 12 and 13, as well as flow lines 2 and 4 feeding the fluidisation section with a flow comprising water, respectively a recirculation flow comprising organic waste in aqueous solution.

In any case, the process according to the present invention allows to advantageously perform the combined treatment of organic solid waste and sewage sludges thanks to the steps of feeding - through flow lines 3 and 5 - organic solid waste, respectively a flow comprising sewage sludges, to an anaerobic decomposition section (block 14). The organic substances fed to the decomposition section (block 14) are then decomposed by anaerobic fermentation, producing a gas flow comprising methane and a flow comprising stabilised sewage sludge.

The plant for the combined treatment of sewage sludges and organic solid waste according to the present invention advantageously comprises the sections indicated by blocks 11-14 of Figure 1, in particular section 14.

At the inlet and between the sections that form said plant there are also provided suitable feeding respectively recirculation means of a type known in the field, for instance ducts, pipings, pumps, conveyor belts and the like, schematically represented by flow lines 1-7 of Figure 1, in particular flow lines 3 and 5.

According to a particularly advantageous aspect of the present invention, a method for the modernisation of a sewage sludges treatment plant of the type comprising an anaerobic decomposition section (block 14) and means for feeding a flow comprising sewage sludges to said anaerobic decomposition section (flow line 5), comprises the steps of providing an organic solid waste grinding section (block 11), means for feeding organic solid waste to said grinding section (flow line 1 and block 11), and means for feeding said organic solid waste suitably ground in said grinding section to said anaerobic decomposition section (flow lines 1 and 3, block 14).

With regard to this point, it is worth stressing that, thanks to the present invention, it is advantageously possible to utilise the existing plants for anaerobic treatment of sewage sludges for the combined treatment of organic solid waste, avoiding therefore to have to realise additional plants which are very expensive and cause problems of environmental and technical character.

Moreover, said modernisation advantageously requires quite marginal, technically simple and little expensive changes in the existing plants for the anaerobic treatment of sewage sludges, which make even more interesting the application of the present invention.

In particular, the steps of grinding and fluidisation of organic solid waste have the function of rendering the physical characteristics of said waste substantially similar to those of sewage sludges, preventing in this way undesired structural or operating modifications in the anaerobic decomposition section.

Surprisingly, by feeding the suitably treated organic solid waste to the existing anaerobic decomposition section of the sewage sludges treatment plant, it has been found that the efficiency and the global yield of the degradation of organic substances have advantageously improved, producing in a shorter time a higher quantity of methane (in the form of a greater flow rate).

According to other embodiments of the above modernisation method in accordance with the invention, further sections or means are advantageously provided, as is described in the dependent claims 14-16 reported hereafter.

From the foregoing description emerge clearly the numerous advantages achieved by the present invention; in particular, it is obtained an anaerobic decomposition of organic solid waste in a very simple and effective way, with extremely contained investment and operating costs.

## Claims

1. Anaerobic process for the combined treatment of sewage sludges and organic solid waste, comprising the steps of:
- feeding organic solid waste to an anaerobic decomposition section;
- feeding a flow comprising sewage sludges to said anaerobic decomposition section;
- decomposing through anaerobic fermentation the organic substances fed to said decomposition section, obtaining a gas flow comprising methane and a flow comprising stabilised sewage sludge.

2. Process according to claim 1, characterised in that it further comprises the preliminary steps of:
- feeding at least a part of said organic solid waste to a fluidisation section;
- mixing said organic solid waste with a flow comprising water in said fluidisation section, obtaining a flow comprising organic solid waste in aqueous solution;
- feeding said flow comprising organic solid waste in aqueous solution to said anaerobic decomposition section.

3. Process according to claim 1, characterised in that it further comprises the preliminary step of grinding at least a part of said organic solid waste fed to said anaerobic decomposition section.

4. Process according to claim 2, characterised in that it further comprises the preliminary step of grinding at least a part of the organic solid waste fed to said fluidisation section and/or coming from said fluidisation section.

5. Process according to claim 4, characterised in that it further comprises the step of recirculating at least a part of the suitably ground organic solid waste to said fluidisation section.

6. Process according to claim 2, characterised in that the water content in the flow comprising organic solid waste in aqueous solution coming from said fluidisation section is comprised between 90% and 95% by weight with respect to the total weight of the solution.

7. Process according to claims 3 and 4, characterised in that the size of the organic solid waste fed to said anaerobic decomposition section is smaller than 5 mm on the average.

8. Plant for the combined treatment of sewage sludges and organic solid waste, comprising:
- an anaerobic decomposition section (14);
- respective means (3, 5) for feeding organic solid waste and a flow comprising sewage sludges to said anaerobic decomposition section, obtaining a gas flow comprising methane (6) and a flow comprising stabilised sewage sludge (7).

9. Plant according to claim 8, characterised in that it further comprises:
- an organic solid waste fluidisation section (12);
- respective means (1, 2) for feeding at least a part of said organic solid waste and a flow comprising water to said fluidisation section;
- means (3) for feeding a flow comprising organic solid waste in aqueous solution obtained in said fluidisation section (12) to said anaerobic decomposition section (14).

10. Plant according to claim 8, characterised in that it further comprises a grinding section (11, 13) for grinding at least a part of said organic solid waste fed to said anaerobic decomposition section (14).

11. Plant according to claim 9, characterised in that it further comprises a grinding section (11, 13) for grinding at least a part of said organic solid waste fed to said fluidisation section (12) and/or coming from said fluidisation section (12).

12. Plant according to claim 11, characterised in that it further comprises means (4) for recirculating at least a part of the suitably ground organic solid waste to said fluidisation section (12).

13. Method for the modernisation of a sewage sludges treatment plant comprising an anaerobic decomposition section (14) and means (5) for feeding a flow comprising sewage sludges to said anaerobic decomposition section (14), characterised in that it comprises the steps of:
- providing an organic solid waste grinding section (11);
- providing means (1) for feeding organic solid waste to said grinding section;
- providing means (1, 3) for feeding said organic solid waste suitably ground in said grinding section (11) to said anaerobic decomposition section (14).

14. Method according to claim 13, characterised in that it further comprises the steps of:
- providing an organic solid waste fluidisation section (12);
- providing respective means (1, 2) for feeding at least a part of said organic solid waste suitably ground in said grinding section (11) and a flow comprising water (2) to said fluidisation section (12);
- providing means (3) for feeding a flow comprising organic solid waste in aqueous solution obtained in said fluidisation section (12) to said anaerobic decomposition section (14).

15. Method according to claim 14, characterised in that it further comprises the step of providing a grinding section (13) for grinding at least a part of the organic solid waste contained in said flow comprising organic solid waste in aqueous solution coming from said fluidisation section (12).

16. Method according to claim 15, characterised in that it further comprises the step of providing means (4) for recirculating at least a part of the suitably ground organic solid waste to said fluidisation section (12).

17. Use of an anaerobic biologic reactor for the combined treatment of sewage sludges and organic solid waste.
